# EUROPEAN PATENT SPECIFICATION

(11) **EP 2 947 132 B1**
(45) Date of publication and mention of the grant of the patent: **15.02.2017**
(21) Application number: 15168927.0
(22) Date of filing: 22.05.2015
(51) Int. Cl.: C10G 11/18, C10L 1/08, B01J 35/10, B01J 37/10, B01J 23/75, B01J 23/755, C10G 11/02

(54) **RFCC PROCESS WITH MAXIMIZED DIESEL YIELDS**
RFCC-VERFAHREN MIT MAXIMIERTER DIESELAUSBEUTE
PROCEDE RFCC AVEC RENDEMENTS DIESEL OPTIMISÉS

(30) Priority: 23.05.2014 KR 20140062082
(43) Date of publication of application: 25.11.2015
(73) Proprietor: SK Innovation Co., Ltd., Seoul 110-728 (KR)
(72) Inventor: Jeon, HEE-Jung, 302-841 Daejeon (KR); Kim, Yong-Woo, 305-729 Daejeon (KR)
(74) Representative: Stolmár & Partner Patentanwälte PartG mbB

(56) References cited:
- US-A1- 2012 024 748
- US-A1- 2013 130 889
- US-A1- 2013 168 290

## Description

### [TECHNICAL FIELD]

The present invention relates to a RFCC process. More specifically, the present invention relates to a RFCC process with maximized diesel yield which comprises catalytically reacting a catalytic cracking catalyst in which zeolite has been selectively removed, with a petroleum feedstock in a reaction zone of a fluidized bed catalytic cracking unit to thereby obtain a product stream, an unreacted petroleum feedstock and a mixture of the used catalysts, and separating and collecting the product stream from the used catalyst and the unreacted petroleum feedstock.

### [BACKGROUND ART]

The RFCC process is a process for producing LPG, gasoline, diesel, naphtha and the like by further conducting a catalytic cracking reaction on a heavy residual oil that remains after the fractionation of a crude oil. According to the RFCC process, LPG, gasoline, diesel and the like are repoduceed by re-cracking the heavy residual oil which itself does not contain fuel. This is referred to as a ground oilfield and applied to an important advanced equipment of refinery companies.

Products which can be obtained through the RFCC process, include various substances based on the boiling point, such as LPG, gasoline and diesel, but the main target product to date is gasoline. In the current RFCC process, the yield of gasoline is approximately 50% by weight. Further, considering the MTBE and alkylate resulting from the C4 product obtained in the RFCC process, the yield of gasoline is in reality more than 60% by weight.

However, as the demand for gasoline is decreasing and shale-gas based gasoline alternative energy sources are developed, gosoline prices are falling continuously, and this trend is expected to be more extreme in the future.

In this regard, there is a need to change a target product of the RFCC process to substances other than gasoline. The substance which can be the most practical alternative can be seen as diesel.

The RFCC process includes various steps. However, considering only the cracking reaction step, it can be seen that the RFCC process consists largely of a reaction step in the reactor and a regeneration step in the regenerator. The RFCC catalyst and the petroleum feedstock are reacted in the rising tube of the reactor and so the cracking reaction takes place under the conditions of 532°C. The products produced from the cracking reaction are discharged to the upper part of the reactor. The catalyst deactivated by a coke produced during the cracking reaction regenerates the catalyst activity while removing the coke by air burning in the regenerator. The regenerated catalyst is again moved into the reactor to conudct the cracking reaction.

In theory, the catalyst must be completely regenerated during the above process, but in practice, the catalyst is gradually deactivated. The reason is because a high temperature steam is injected for the smooth stirring and heat control of the catalyst and the petroleum feedstock in the reactor section where the cracking reactions occur, and so the zeolite in the RFCC catalyst is dealuminated by the above injected steam and its structure collapses.

Also, a small amount of vanadium present in the heavy residual oil forms an eutectic mixture with an aluminium or an alkali metal of zeolite in the course of removing the coke to induce the structural collapse, thus deactivating the catalyst.

Due to these problems, in order to maintain gasoline yield at a constant level, a process catalyst corresponding to about 3-5% by weight of the catalyst present durng the RFCC process is withdrawn, and a fresh catalyst is introduced as required, thus maintaining the gasoline yield. At this time, the catalyst withdrawn from the process is collectively referred to as E-cat.(Equilibrium catalyst) and is considered to be a representative catalyst that shows the actual activity of the RFCC process. For these reasons, the evaluation of the RFCC catalyst is made on the catalyst optionally deactivated as in E-cat., rather than on the fresh catalyst.

The E-cat. thus withdrawn has been mainly utilized as a raw material for manufacturing building materials in the past, but as environmental regulations became more strict, it was classified as industrial waste and so the treatment thereof is not easy. Furhter, there are problems in that it is undesirable from the viewpoint of environmental protection.

US2013/0130889 discloses an RFCC process.

### [DISCLOSURE OF INVENTION]

### [TECHNICAL PROBLEM]

In view of the above described problems and recent changes in demand, the present invention provides a process with maximized diesel yield by modifying the conventional E-cat. discarded from the RFCC process and utilizing it in the RFCC process. Specifically, the present invention provides a RFCC process with maximized diesel yield which comprises catalytically reacting a catalytic cracking catalyst in which zeolite has been selectively removed, with a petroleum feedstock in a reaction zone of a fluidized bed catalytic cracking unit to thereby obtain a product stream, an unreacted petroleum feedstock and a mixture of the used catalysts, and separating and collecting the product stream from the used catalyst and the unreacted petroleum feedstock as in claim 1.

However, the technical problem to be solved by the present invention is not limited to the above, and other problems that are not mentioned herein will be clearly understood by those skilled in the art from the following description.

### [TECHNICAL SOLUTION TO THE PROBLEM]

According to one embodiment of the present invention, a RFCC process with maximized diesel yield which comprises catalytically reacting a catalytic cracking catalyst in which zeolite has been selectively removed, with a petroleum feedstock in a reaction zone of a fluidized bed catalytic cracking unit to thereby obtain a product stream, an unreacted petroleum feedstock and a mixture of the used catalysts, and separating and collecting the product stream from the used catalyst and the unreacted petroleum feedstock, is provided as in claim 1.

### [ADVANTAGEOUS EFFECTS]

According to the RFCC process with maximized diesel yield in accordance with the present invention, since the modified E-cat. is used, the following effects are avaialble in terms of the catalyst.

First, the pore structure of the RFCC catalyst matrix for pre-cracking can be used without change.

Second, through the collapse of the zeolite structure, the pores in the mesopore or macropore area are well-developed and the activity of the cracking increases.

Third, it is possible to use as a support for metals such as nickel or cobalt to maintain the coke level and so the present RFCC process can be applied to a traditional RFCC process without change.

Moreover, the RFCC process according to the present invention has the following effects.

First, since the modified E-cat. is used, the diesel yield can be maximized.

Second, since the E-cat. discarded from a traditional RFCC process is used, the cost of purchasing the catalyst is reduced and economic efficiency is excellent.

Third, the present RFCC process can increase the yield of H₂ in the course of producing a coke in the process and so an additional economic benefit can be expected.

### [BEST MODE]

Hereinafter, the present invention is described in detail by way of embodiments of the invention such that it can be easily performed by those having ordinary skill in the art to which this invention belongs. The present invention may be embodied in several different forms, but should not be construed to be limited to the embodiments set forth herein.

Now, the present invention will be described in detail.

The RFCC process of the present invention comprises catalytically reacting a catalytic cracking catalyst in which zeolite has been selectively removed, with a petroleum feedstock in a reaction zone of a fluidized bed catalytic cracking unit to thereby obtain a product stream, an unreacted petroleum feedstock and a mixture of the used catalysts, and separating and collecting the product stream from the used catalyst and the unreacted petroleum feedstock as in claim 1.

First, the cracking catalyst in which zeolite has been selectively removed is catalytically reacted with the petroleum feedstock in a reaction zone of a fluidized bed catalytic cracking unit to thereby obtain a product stream, an unreacted petroleum feedstock and a mixture of the used catalysts.

In the present invention, the catalytic cracking catalyst in which zeolite has been selectively removed is in a form wherein the E-cat. generated in the conventional RFCC process is modified.

That is, the catalytic cracking catalyst used in the RFCC process of the present invention is in a form wherein zeolite in the E-cat. generated in the conventional RFCC process has been selectively removed. The pores with a diameter greater than 20Å make up more than 80% by volume of the total pore count of the catalyst. The ratio (Z/M) of the specific surface area of zeolite and the specific surface area of the matrix may be 0.2 or less.

It can be seen that zeolite is not sufficiently selectively removed until pores with a diameter greater than 20Å make up more than 80% by volume of the total pore count of the catalyst. In this case, the yield of diesel in the cracking reaction would be maximized.

The catalytic cracking catalyst in which zeolite has been selectively removed can be prepared by subjecting to steam treatment under hot water conditions of greater than 20 bar and greater than 250°C.

The ratio of zeolite present in the catalytic cracking catalyst can be controlled according to the steam treatment condition. The zeolite can be effectively selectively removed under hot water conditions of greater than 20 bar and greater than 250°C. Under the above conditions, the content of zeolite in the catalyst is controlled to be less than 20% by weight. A temperature condition ranging from 250 to 400°C is more prefereable.

The catalytic cracking catalyst in which zeolite has been selectively removed after the steam treatment can be simply dried without a separate firing process.

In the present invention, the catalytic cracking catalyst in which zeolite has been selectively removed can further comprise one or more selected from the group consisting of nickel and cobalt.

The coke produced in the catalystic cracking reaction plays a very important role in maintaining the overall heat balance of the RFCC process. Accordingly, in the case of using a catalytic cracking catalyst in which nickel or covalt is further introduced, the coke level of the RFCC process can be appropriately maintained, thus maximizing the yield of diesel.

In this case, the metal content of nickel and cobalt in the cracking catalyst which said zeolite has been selectively removed can be determined from the viewpoint of maintaining an appropriate coke level. In other words, depending on the properties of the petroleum feedstock such as the content of API, naphthene content, and the catalytic properties such as a specific surface area of the matrix and pore distribution, the coke level of the catalytic cracking catalyst in which zeolite has been selectively removed as described above can vary. Accordingly, the content of nickel and cobalt can be appropriately controlled by those skilled in the art.

Since the RFCC process of the present invention uses the catalyst in which zeolite has been selectively removed, the selectivity of diesel can be very high, but it is likely that the yield of convension itself is low. Two methods can be applied to compensate for this. One is increasing the amount of catalyst compared to the raw material, and the other one is raising the reaction temperature. The former is a method to induce the cracking reaction using a relatively large amount of catalyst compared to the same raw material, and the latter is a method to increase the cracking reaction rate. In the latter case, the present invention has no costs associated with the catalyst itself, and can very effectively increase the yield of diesel by a simple operation that raises only the temperature by the additon of water for the steam treatment. The temperature in the reaction zone of the fluidized bed catalytic cracking unit for maximizing the diesel yield ranges preferably from 503 to 593 °C.

When the catalytic cracking catalyst in which zeolite has been selectively removed is catalytically reacted with a petroleum feedstock in a reaction zone of a fluidized bed catalytic cracking unit, a product stream, an unreacted petroleum feedstock and a a mixture of the used catalysts are obtained.

The above-described product stream is separated and collected from the used catalyst and the unreacted petroleum feedstock to obtain a desired carbon compound comprising a diesel.

According to the RFCC process of the present invention, the selectivity of diesel is increased by using the catalytic cracking catalyst as described above, the selectivity of zeolite is incresed and so the diesel yield in the product stream is increased.

### Example 1

### (1) Preparation of catalyst

800 g of E-Cat. generated in the RFCC process was introduced in 2L autoclave in which 300g of water was introduced and sealed. With stirring at 300rpm, the reaction was then heated up to 350°C at a rate of 20bar, 10°C/min, and then maintained for 6 hours when it became 350°C. After the reaction was completed, water was removed via filtering, and then dried in 100°C oven. In order to determine the physical properties of the dried catalytic cracking catalyst in which zeolite has been selectively removed, the catalyst was sujected to BET, XRD and XRF analysis, to confirm whether the zeolite remained in the catalyst. The content of zeolite in the catalyst was 18% by weight, and pores with a diameter of less than 20Å were 18% by volume of the entirse catalyst pore count. The ratio (Z/M) of a specific surface area of zeolite and a specific surface area of matrix was 0.1, based on the specific surface area. The analysis was conducted five times in this manner and ensured the catalytic cracking catalyst in which zeolite has been selectively removed.

### (2) Deactivation of catalyst

In order to evaluate the RFCC catalytic activity of the catalytic cracking catalyst in which zeolite has been selectively removed, produced in the above (1), the catalyst was deactivated under the operating conditions of the process. A fresh catalyst of the RFCC process was subjected to XRD analysis of D-cat. under various CPS operation conditions. The results confirmed that the most similar catalytic activity to E-cat. was given under CPS30 cycle operating conditions. The cracking catalyst in which zeolite has been selectively removed, produced in the above (1) under CPS30 cycle operating conditions was deactivated.

More specifically, in 1 kg of the catalytic cracking catalyst in which zeolite has been selectively removed, produced in the above (1), Ni, V and Fe were introduced at 3000, 4000, and 3000 ppm, respectively. Ni, V and Fe were introduced by the method wherein the compound precursors in the form of naphthenate were dissolved in toluene, supported on the prepared catalyst and dried. By repeating these methods, the catalytic cracking catalyst was produced in a total of 4 kg. 4 kg of the cracking catalyst in which Ni, V, Fe were introduced in 3000, 4000, and 3000 ppm, respectively, was introduced into the CPS equipment. Water/catalyst was operated under 0.04 h-1 conditions, 1 cycle was configured to maintain by 10 minutes each step at 788°C under the conditions of N₂, air, N₂, 5% propylene (N₂ balance). This was driven for 30 cycles, and finally deactivated catalytic cracking catalyst was produced. The resulting deactivated cracking catalyst confirmed the catalystic physical properties through BET, XRD, XRF analysis.

### (3) Application to the RFCC process

The heavy residual oil as the petroleum feedstock was catalystically reacted with the above prepared catalyst in a reaction zone of a fluidized bed catalytic cracking unit to thereby obtain a product stream, an unreacted petroleum feedstock and a a mixture of the used catalysts. The product stream was separated and collected from the used catalyst and the unreacted petroleum feedstock.

**[Table 1]**

| Item | Unit | Analytical value |
|---|---|---|
| API | 60°F | 21.1 |
| Sulfur | Wt.% | 0.41 |
| Nitrogen | Mg/kg | 1023 |
| MCRT | Wt.% | 3.77 |
| Asphaltenes | Wt.% | 0.3 |
| Fe | Mg/kg | 4.9 |
| Ni | Mg/kg | 3.3 |
| V | Mg/kg | 3.9 |
| D1160 (°C) | IBP | 292.9 |
| | 5% | 378.2 |
| | 10% | 399.1 |
| | 30% | 458.3 |
| | 50% | 512.5 |
| | 60% | 544.2 |
| Recovery | Vol.% | 66 |

The petroleum feedstock was introduced into the reactor under a condition of 500g/h, and the stream of the reactor was introduced under a condition of 90g/h. The reactor was operated at a temperature of 573°C and the regenerator was operated at a temperature of 700°C. The overall reaction pressure was 1.6kgf/cm²g. After completion of the reaction, the resulting gas product was analyzed by GC-RGA, and the liquid product was analyzed by GC-simdist. The coke analysis was performed using the CO/CO₂ analyzer. The petroleum feedstock was introduced into the reactor under a condition of 500g/h, and stream of the reactor was introduced under a condition of 90g/h. The reactor was operated at a temperature of 573°C, and the regenerator was operated at a temperature of 700°C. The overall reaction pressure was 1.6kgf/cm²g. After completion of the reaction, the resulting gas product was analyzed by GC-RGA, and the liquid products were analyzed by GC-simdist. The coke analysis was performed using the CO/CO₂ analyzer.

### Example 2

### (1) Preparation of catalyst

The catalyst in which 3% by weight of nickel was introduced was prepared by dissolving nickel naphthenate in toluene and then supporting it on the catalyst obtained in Example 1.

### (2) Deactivation of the catalyst and application to the RFCC process

The catalyst was deactivated under the same conditions as Example 1, and then operated at the reaction temperatujre of 558°C under the same DCR operation conditions to obtain a desired product.

### Example 3

### (1) Preparation of catalyst

The catalyst in which 5% by weight of cobalt was introduced was prepared by dissolving cobalt naphthenate in toluene and then supporting it on the catalyst obtained in Example 1.

### (2) Deactivation of the catalyst and application to the RFCC process

The catalyst was deactivated under the same conditions as Example 1, and then operated at a reaction temperatujre of 562°C under the same DCR operation conditions to obtain a desired product.

### Comparative Example

### (1) catalyst

In order to confirm the physical properites of 800g of E-Cat. generated in the RFCC process, the catalyst was subjected to BET, XRD and XRF analysis and then the presence and content of zeolite in the catalyst were confirmed. The content of zeolite in the catalyst was 20.5% by weight and this was calculated based on the specific surface area of the zeolite surface area. The ratio (Z/M) of a specific surface area of zeolite and a specific surface area of matrix was 0.4, based on the specific surface area.

### (2) Application to the RFCC process

The heavy residual oil as the petroleum feedstock was catalytically reacted with the above prepared catalyst in a reaction zone of a fluidized bed catalytic cracking unit to thereby obtain a product stream, an unreacted petroleum feedstock and a mixture of the used catalysts. The product stream was separated and collected from the used catalyst and the unreacted petroleum feedstock.

### Evaluation

With respect to the product stream obtained in the RFCC process of the Examples and Comparative Examples, the selectivity and content of diesel, gasoline and H₂ were evaluated and the results are shown in Table 2 below.

**[Table 2]**

| | Comparative Example | Example 1 | Example 2 | Example 3 |
|---|---|---|---|---|
| Diesel | 16.59 | 28.17 | 35.54 | 31.83 |
| Gasoline | 48.18 | 31.19 | 32.15 | 34.03 |
| H₂ | 0.24 | 0.27 | 0.94 | 0.61 |
| Gas product | 19.34 | 26.27 | 14.9 | 17.09 |
| SLO | 7.72 | 6.21 | 8.58 | 8.03 |
| coke | 7.93 | 7.89 | 7.89 | 7.91 |

Diesel had the temperature ranging from 200 to 360°C, and gasoline was defined as a liquid product of not greater than 200°C. The gas product is a product corresponding to C1-C4, and SLO is an unreacted slurry oil. The comparison was performed by an iso-coke criteria which is an operation criteria actually available in commercial plants. The iso-coke comparison was performed at coke yield of 7.93%.

As can be seen from Table 2, according to the RFCC process of the present invention, by uing the catalytic cracking catalyst in which zeolite has been selectively removed, the selectivity and yield of diesel were significantly increased and the selectivity and yield of gasoline were lowered.

Moreover, it could be seen that, by further introducing metals of nickel or cobalt into the catalyst, the yield of H₂ was high.

## Claims

1. A RFCC process with maximized diesel yield which comprises selectively removing zeolite in a catalytic cracking catalyst, catalytically reacting the catalytic cracking catalyst in which zeolite has been selectively removed, with a petroleum feedstock in a reaction zone of a fluidized bed catalytic cracking unit to thereby obtain a product stream, an unreacted petroleum feedstock and a mixture of the used catalysts, and separating and collecting the product stream from the used catalyst and the unreacted petroleum feedstock, wherein the catalytic cracking catalyst in which zeolite has been selectively removed has pores in which those with a diameter greater than 20 Å make up more than 80% by volume of the total probe count of the catalyst, and the ratio (Z/M) of a specific surface area of zeolite and a specific surface area of matrix is 0.2 or less.

2. The RFCC process with maximized diesel yield according to claim 1 wherein the catalytic cracking catalyst in which zeolite has been selectively removed was subjected to steam treatment under hot water conditions of greater than 20 bar and greater than 250 °C and so the content of zeolite in the catalyst is controlled to less than 20% by weight.

3. The RFCC process with maximized diesel yield according to claim 1 wherein the catalytic cracking catalyst in which zeolite has been selectively removed further comprises one or more selected from the group consisting of nickel and cobalt.

4. The RFCC process with maximized diesel yield according to claim 1 wherein the petroleum feedstock is a heavy residual oil which undergoes fractional distillation of the raw oil.

5. The RFCC process with maximized diesel yield according to claim 1 wherein the temperature in the reaction zone of the fluidized bed catalytic cracking unit ranges from 503 to 593 °C.

## Patentansprüche

1. RFCC-Verfahren mit maximierter Dieselausbeute, welches umfasst: selektives Entfernen von Zeolith in einem Katalysator für katalytisches Cracken, katalytisches Umsetzen des Katalysators für katalytisches Cracken, aus welchem Zeolith selektiv entfernt wurde, mit einem Petroleum-Rohmaterial in der Reaktionszone einer Wirbelschichteinheit für katalytisches Cracken, um so einen Produktstrom, ein nicht umgesetztes Petroleum-Ausgangsmaterial und eine Mischung der verbrauchten Katalysatoren zu erhalten, und Trennen und Sammeln des Produktstroms von dem verbrauchten Katalysator und dem nicht umgesetzten Petroleum-Ausgangsmaterial, wobei der Katalysator für katalytisches Cracken, aus welchem Zeolith selektiv entfernt wurde, Poren hat, unter denen die mit einem Durchmesser größer als 20 Å mehr als 80 % Volumen der Gesamtprobenzahl des Katalysators ausmachen, und das Verhältnis (Z/M) der spezifischen Oberfläche des Zeoliths und der spezifischen Oberfläche der Matrix 0,2 oder weniger ist.

2. RFCC-Verfahrens mit maximierter Dieselausbeute gemäß Anspruch 1, wobei der Katalysator für katalytisches Cracken, aus welchem Zeolith selektiv entfernt wurde, einer Dampfbehandlung unter Heißwasserbedingungen von größer als 20 bar und größer als 250°C unterzogen wurde und so der Gehalt an Zeolith im Katalysator auf weniger als 20 % Gewicht geregelt wurde.

3. RFCC-Verfahren mit maximierter Dieselausbeute gemäß Anspruch 1, wobei der Katalysator für katalytisches Cracken, aus welchem Zeolith selektiv entfernt wurde, weiter umfassend eines oder mehrere aus der Gruppe bestehend aus Nickel und Kobalt.

4. RFCC-Verfahren mit maximierter Dieselausbeute gemäß Anspruch 1, wobei das Petroleum-Ausgangsmaterial ein schweres Restöl ist, das fraktionierter Destillierung des Rohöls unterzogen wird.

5. RFCC-Verfahren mit maximierter Dieselausbeute gemäß Anspruch 1, wobei die Temperatur in der Reaktionszone der Wirbelbetteinheit der für katalytisches Cracken von 503-593°C reicht.

## Revendications

1. Procédé RFCC avec une moisson maximalisée de diesel qui comprend : enlever sélectivement zeolithe d'un catalyseur pour le cracking catalytique, réagir catalytiquement le catalyseur pour le cracking catalytique dont zeolithe a été enlevé avec une matière de base de pétrole dans une zone de réaction d'une unité à lit fluidisé pour le cracking catalytique pour ainsi obtenir un courant de produit, une matière de base de pétrole non-réagie et une mixture des catalyseurs usés, et séparer et collecter le courant de produit du catalyseur usé et de la matière de base de pétrole non-réagie, dans lequel le catalyseur pour le cracking catalytique dont zeolithe a été enlevé a des pores dont ceux avec un diamètre plus grand que 20 Å composent plus que 80% par volume du nombre total de la sonde et le rapport (Z/M) de la surface spécifique du zeolithe et la surface spécifique de la matrice est 0,2 ou moins.

2. Procédé RFCC avec une moisson maximalisée de diesel selon la revendication 1 dans lequel le catalyseur pour le cracking catalytique dont zeolithe a été enlevé a subi un traitement à la vapeur dans des conditions de l'eau chaude de plus que 20 bar et plus que 250°C et le contenu de zeolithe est ainsi dirigé à moins de 20% par poids.

3. Procédé RFCC avec une moisson maximalisée de diesel selon la revendication 1 dans lequel le catalyseur pour le cracking catalytique dont zeolithe a été enlevé comprend en plus un ou plusieurs du groupe consistant de nickel et cobalt.

4. Procédé RFCC avec une moisson maximalisée de diesel selon la revendication 1 dans lequel la matière de base de pétrole est une huile résiduelle lourde qui subit la distillation fractionnée de l'huile brute.

5. Procédé RFCC avec une moisson maximalisée de diesel selon la revendication 1 dans lequel la température dans la zone de réaction de l'unité à lit fluidisé pour le cracking catalytique varie de 503 à 593°C.
